# EUROPÄISCHE PATENTANMELDUNG

(11) **EP 4 573 873 A1**
(43) Veröffentlichungstag der Anmeldung: **25.06.2025**
(21) Anmeldenummer: 24211991.5
(22) Anmeldetag: 11.11.2024
(51) Int. Cl.: A01D 41/127, A01D 41/14, A01D 57/02, A01D 57/04

(54) **SELBSTFAHRENDER MÄHDRESCHER MIT HASPELEINGRIFFSEINSTELLUNG**

(30) Priorität: 19.12.2023 DE 102023135792
(71) Anmelder: CLAAS Selbstfahrende Erntemaschinen GmbH, 33428 Harsewinkel (DE)
(72) Erfinder: Spiekermann, Sebastian, 48346 Ostbevern (DE); Irmer, Daniel, 33442 Herzebock-Clarholz (DE); Schröder, Maximilian, 33330 Gütersloh (DE); Bischoff, Jonathan, 44135 Dortmund (DE)
(74) Vertreter: CLAAS Gruppe

(57) **Zusammenfassung**

Die vorliegende Erfindung betrifft einen selbstfahrenden Mähdrescher (1) mit Arbeitsaggregaten (5) zum Aufnehmen, Bearbeiten und Weiterleiten von Erntegut eines Pflanzenbestandes (2) eines landwirtschaftlichen Feldes.

Die vorliegende Erfindung beruht auf dem allgemeinen Gedanken, dass eine Einstellvorrichtung (4) des selbstfahrenden Mähdreschers (1) dazu vorgesehen und eingerichtet ist, in Abhängigkeit der Haspelhöhe (32) und der Pflanzenhöhe (31) einen Haspeleingriffswert (33) bezüglich des Haspeleingriffs in den Pflanzenbestand (2) zu ermitteln und basierend auf diesem ermittelten Haspeleingriffswert (33) den selbstfahrenden Mähdrescher (11) einzustellen.

## Beschreibung

Die vorliegende Erfindung betrifft einen selbstfahrenden Mähdrescher mit Arbeitsaggregaten zum Aufnehmen, Bearbeiten und Weiterleiten von Erntegut eines Pflanzenbestandes eines landwirtschaftlichen Feldes und mit einem Antriebsmotor zum Antrieb dieser Arbeitsaggregate als auch zum Vortrieb des selbstfahrenden Mähdreschers entlang des landwirtschaftlichen Feldes.

Die EP 3 300 580 A1 offenbart die Ermittlung einer optimalen Haspelhöhe der Haspel in Abhängigkeit der Bestandshöhe, um die tatsächliche Haspelhöhe bezüglich des Bodens einzustellen. Diese optimale Haspelhöhe der Haspel ist kein konstanter Wert, sondern hängt u.a. von Bestandsbedingungen, der Fruchtart und/oder der Art des Vorsatzgerätes ab.

Der vorliegenden Erfindung liegt die Aufgabe zugrunde, eine verbesserte Ausführungsform eines selbstfahrenden Mähdreschers anzugeben, der einen einstellungstechnisch klareren Wert bezüglich der optimalen Einstellung der Haspel ermittelt und verwendet.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass eine Einstellvorrichtung des selbstfahrenden Mähdreschers dazu vorgesehen und eingerichtet ist, in Abhängigkeit der Haspelhöhe und einer Pflanzenhöhe einen Haspeleingriffswert bezüglich des Haspeleingriffs in den Pflanzenbestand zu ermitteln und darauf basierend den selbstfahrenden Mähdrescher einzustellen.

Der selbstfahrende Mähdrescher weist mehrere Arbeitsaggregate zum Aufnehmen, Bearbeiten und Weiterleiten von Erntegut eines Pflanzenbestandes, der auf einem landwirtschaftlichen Feldboden ausgebildet ist und bezüglich dieses Feldbodens eine Pflanzenhöhe aufweist.

Ein solches Arbeitsaggregat kann ein an die Arbeitsmaschine anbringbares Vorsatzgerät, ein Schrägförderer des Mähdreschers, eine Dreschvorrichtung des Mähdreschers, eine Abscheidevorrichtung des Mähdreschers, eine Reinigungsvorrichtung des Mähdreschers, ein Kornelevator des Mähdreschers, eine Überkehrschnecke des Mähdreschers, eine Korntankentleervorrichtung des Mähdreschers, ein Nachbeschleuniger des Mähdreschers, eine Kornschnecke und/oder eine Korntankschnecke des Mähdreschers sein.

Das anbringbare Vorsatzgerät kann ein Schneidwerk ausbilden, welches eine Haspel umfasst, die eine mittels Aktoren einstellbare Haspelhöhe bezüglich des Feldbodens aufweist.

Der selbstfahrende Mähdrescher kann einen Antriebsmotor, insbesondere einen Elektromotor und/oder einen Dieselmotor, zum Antrieb der Arbeitsaggregate und/oder zum Vortrieb der selbstfahrenden landwirtschaftlichen Arbeitsmaschine mit einer Fahrgeschwindigkeit mit einer Fahrtrichtung entlang des landwirtschaftlichen Feldes aufweisen.

Ferner umfasst der selbstfahrende Mähdrescher eine Einstellvorrichtung zur Einstellung des Mähdreschers in Abhängigkeit von Betriebsparametern, insbesondere sensorisch erfassten Betriebsparametern, des Mähdreschers und sensorisch erfassten Umgebungsparametern der Umgebung des Mähdreschers, wobei die Betriebsparameter die Haspelhöhe der Haspel und die Umgebungsparameter die Pflanzenhöhe des aufzunehmenden Pflanzenbestandes umfassen.

Erfindungsgemäß ist diese Einstellvorrichtung dazu vorgesehen und eingerichtet, insbesondere ausgebildet und/oder programmiert, in Abhängigkeit der Haspelhöhe und der Pflanzenhöhe den Haspeleingriffswert zu ermitteln und basierend auf diesem ermittelten Haspeleingriffswert den selbstfahrenden Mähdrescher einzustellen.

Der Haspeleingriffswert stellt eine Kenngröße für die Haspelposition in Relation zur Pflanzenhöhe dar. Dementsprechend ist es möglich, eine Vorgabe für den optimalen Haspeleingriff bei verschiedenen Früchten und Bestandsbedingungen zu geben. Dieser Eingriff der Haspel ist eine sehr relevante Größe im Prozess der Erntegutaufnahme. Durch die kontinuierliche Ermittlung des Haspeleingriffs als Kenngröße ergibt sich ein neuer Anzeige- und/oder Einstellwert im Mähdrescher, der aussagekräftiger ist als eine reine Haspelposition. Hierdurch wird u.a. die Einstellung und/oder Kommunikation bezüglich der richtigen Haspelstellung präzisiert.

Die Einstellvorrichtung kann als Steuer- und/oder Regelvorrichtung ausgebildet sein, die eine Einstellung durch eine Steuerung und/oder Regelung des selbstfahrenden Mähdreschers, insbesondere von Komponenten, insbesondere Arbeitsaggregaten und/oder Bedienvorrichtungen, des selbstfahrenden Mähdreschers, bewirkt. Die Einstellvorrichtung kann eine Recheneinheit, insbesondere eine computerbasierte Recheneinheit, und einen Datenspeicher, insbesondere einen computerlesbaren Datenspeicher, aufweisen.

Bei einer vorteilhaften Weiterbildung der erfindungsgemäßen Lösung ist vorgesehen, dass der Haspeleingriffswert der Differenz zwischen der eingestellten Haspelhöhe und der sensorisch erfassten Pflanzenhöhe entspricht. Bei einer Haspelhöhe kleiner als der Pflanzenhöhe, also bei einem negativen Zahlenwert des Haspeleingriffswertes, liegt ein Eingriff der Haspel in den zu erntenden Pflanzenbestand vor.

Bei einer vorteilhaften Weiterbildung der erfindungsgemäßen Lösung ist vorgesehen, dass die Einstellvorrichtung dazu eingerichtet ist, eine Bedienvorrichtung des selbstfahrenden Mähdreschers derart einzustellen, dass einem Fahrer des selbstfahrenden Mähdreschers der ermittelte Haspeleingriffswert optisch sichtbar dargestellt und/oder akustisch wahrnehmbar mitgeteilt wird. Die Bedienvorrichtung des selbstfahrenden Mähdreschers kann hierfür ein Display und/oder Audiogerät aufweisen. Diese Bedienvorrichtung kann innerhalb einer Fahrerkabine des Mähdreschers angeordnet sein.

Bei einer vorteilhaften Weiterbildung der erfindungsgemäßen Lösung ist vorgesehen, dass die Einstellvorrichtung dazu eingerichtet ist, aus dem ermittelten Haspeleingriffswert eine Kenngröße, insbesondere eine abstrakte Kenngröße, bezüglich des Haspeleingriffs zu erstellen. Beispielsweise kann ein Haspeleingriff 20cm bis -20cm als Kenngröße 2 bis -2 dargestellt werden.

Bei einer vorteilhaften Weiterbildung der erfindungsgemäßen Lösung ist vorgesehen, dass der selbstfahrende Mähdrescher eine Sensorvorrichtung oder mehrere Sensorvorrichtungen zur Erfassung der Pflanzenhöhe des aufzunehmenden Pflanzenbestandes aufweist. Wenigstens eine Sensorvorrichtung kann als Lidar-System, Kamera-System und/oder Radar-System ausgebildet sein.

Bei einer vorteilhaften Weiterbildung der erfindungsgemäßen Lösung ist vorgesehen, dass die Erfassung der Pflanzenhöhe des aufzunehmenden Pflanzenbestandes mittels einer separat bezüglich des selbstfahrenden Mähdreschers ausgebildeten Sensorvorrichtung, insbesondere einer Drohne und/oder einem Satelliten, erfolgt. Hierdurch kann eine frühzeitige und vorausschauende Ermittlung des erforderlichen Haspeleingriffswertes ermittelt werden.

Bei einer vorteilhaften Weiterbildung der erfindungsgemäßen Lösung ist vorgesehen, dass die Einstellvorrichtung dazu eingerichtet ist, die Aktoren derart einzustellen, dass der ermittelte Haspeleingriffswert einem Sollwert entspricht. Hierfür können im Datenspeicher der Einstellvorrichtung Fruchttabellen gespeichert sein und/oder erstellt werden, in denen situationsabhängige Standardhaspeleingriffe, also die optimalen Sollwerte des Haspeleingriffswertes, hinterlegt werden und/oder hinterlegt sind.

Bei einer vorteilhaften Weiterbildung der erfindungsgemäßen Lösung ist vorgesehen, dass die Einstellvorrichtung dazu eingerichtet ist, den Sollwert für den Haspeleingriffswert in Abhängigkeit von Standortinformationen zu ermitteln. Die Standortinformationen können satelliten-basierte Positionsinformationen umfassen.

Bei einer vorteilhaften Weiterbildung der erfindungsgemäßen Lösung ist vorgesehen, dass die Einstellvorrichtung dazu eingerichtet ist, den Sollwert für den Haspeleingriffswert in Abhängigkeit von Standortinformationen bezüglich des landwirtschaftlichen Feldbodens zu ermitteln. Diese Standortinformationen können damit verknüpfte satelliten-basierte Positionsinformationen bezüglich des landwirtschaftlichen Feldbodens umfassen.

Bei einer vorteilhaften Weiterbildung der erfindungsgemäßen Lösung ist vorgesehen, dass die Einstellvorrichtung dazu eingerichtet ist, den Sollwert für den Haspeleingriffswert in Abhängigkeit der Pflanzenart des Pflanzenbestandes zu ermitteln. Diese Informationen bezüglich der Pflanzenart des Pflanzenbestandes können mit entsprechend verknüpften satelliten-basierten Positionsinformationen im Datenspeicher der Einstellvorrichtung gespeichert sein.

Bei einer vorteilhaften Weiterbildung der erfindungsgemäßen Lösung ist vorgesehen, dass die Einstellvorrichtung dazu vorgesehen und eingerichtet ist, den Sollwert für den Haspeleingriffswert in Abhängigkeit von Maschinenparametern des selbstfahrenden Mähdreschers zu ermitteln.

Bei einer vorteilhaften Weiterbildung der erfindungsgemäßen Lösung ist vorgesehen, dass sich die Maschinenparameter auf die Ausgestaltung und/oder die Art des Schneidwerks, insbesondere der Haspel, des selbstfahrenden Mähdreschers beziehen.

Im Datenspeicher der Einstellvorrichtung können die Sollwerte für den Haspeleingriffswert, insbesondere Fruchttabellen, satelliten-basierte Positionsinformationen, satelliten-basierte Positionsinformationen bezüglich des landwirtschaftlichen Feldbodens, satelliten-basierte Positionsinformationen bezüglich der Pflanzenart des Pflanzenbestandes und Maschinenparameter des selbstfahrenden Mähdreschers, insbesondere die Ausgestaltung und/oder die Art des Schneidwerks, gespeichert sein. Diese Datenspeicherung kann mittels einem internen, insbesondere einem innerhalb des Mähdreschers angeordnetem, Datenspeicher und/oder mittels externen, insbesondere einem außerhalb des Mähdreschers angeordnetem, Datenspeicher erfolgen. Die Recheneinheit der Einstellvorrichtung kann kommunizierend, insbesondere kabelgebunden kommunizierend und/oder kabellos kommunizierend, mit dem internen und/oder externen Datenspeicher verbunden sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Seitenansicht eines erfindungsgemäßen selbstfahrenden Mähdreschers beim Einsatz auf einem landwirtschaftlichen Feld, und
- Fig. 2: eine weitere Seitenansicht des erfindungsgemäßen selbstfahrenden Mähdreschers kurz vor dem Beginn des Aufnehmens des Erntegut des Pflanzenbestandes.

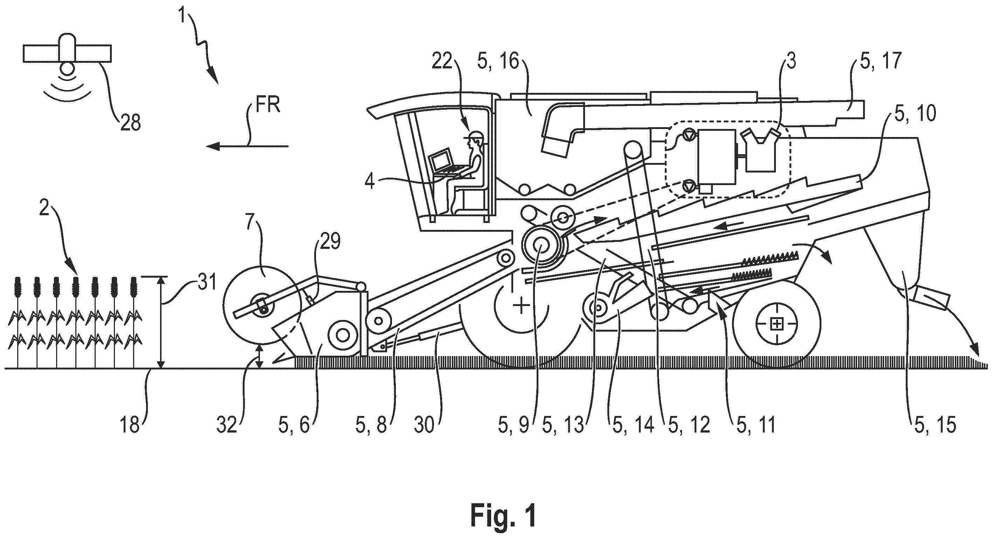

Die Fig. 1 zeigt einen erfindungsgemäßen selbstfahrenden Mähdrescher 1 während eines Einsatzes auf einem landwirtschaftlichen Feld.

Dieser selbstfahrende Mähdrescher 1 weist mehrere Arbeitsaggregate 5 zum Aufnehmen, Bearbeiten und Weiterleiten von Erntegut eines Pflanzenbestandes 2 auf, der auf einem landwirtschaftlichen Feldboden 18 ausgebildet ist und bezüglich dieses Feldbodens 18 eine Pflanzenhöhe 31 aufweist.

Während der Fahrt entlang einer Fahrtrichtung FR durch den Pflanzenbestand 2 nimmt der selbstfahrende Mähdrescher 1 mit einem Schneidwerk 6 das Erntegut auf. Hierfür weist das Schneidwerk 6 zum Neigen des Ernteguts in Richtung des Mähdreschers 2 eine Haspel 7 auf. Diese Haspel 7 weist eine mittels Aktoren 29, 30 einstellbare Haspelhöhe 32 bezüglich des Feldbodens 18 auf.

Mit einem Schrägförderer 8 wird dieses Erntegut zum Dreschwerk 9 gefördert. In dem Dreschwerk 9, einer Abscheidungsvorrichtung 10 und einer Förder- und Reinigungsvorrichtung 11 werden die Körner vom restlichen Erntegut getrennt, sodass ein Erntegutstrom entsteht. Die Förder- und Reinigungsvorrichtung 11 weist ein Gebläse 14 zur Reinigung auf.

Der Mähdrescher 1 weist einen Kornelevator 12 zur Förderung eines Erntegutstroms von der Förder- und Reinigungsvorrichtung 11 zu einem Korntank 16 des Mähdreschers 1 auf. Ferner weist der Mähdrescher 1 eine Überkehrschnecke 13 und einen Strohhäcksler 15 auf. Außerdem weist der selbstfahrende Mähdrescher 1 eine Korntankentleerungsvorrichtung 17 zur Entleerung des Korntanks 16 auf.

Diese bisher dargestellten Komponenten des selbstfahrenden Mähdreschers 1 bilden mehrere Arbeitsaggregate 5 aus, die über einen Antriebsmotor 3 antriebstechnisch versorgt werden. Der Antriebsmotor 3 kann mittels wenigstens einer und/oder mehreren Kopplungsvorrichtungen mit den Arbeitsaggregaten 5 zum Antrieb dieser Arbeitsaggregate 5 gekoppelt sein. Dieser Antriebsmotor 3 ist neben dem Antrieb der Arbeitsaggregate 5 zum Vortrieb des selbstfahrenden Mähdreschers 1 mit einer Fahrgeschwindigkeit in Richtung der Fahrtrichtung FR entlang des landwirtschaftlichen Feldes ausgebildet.

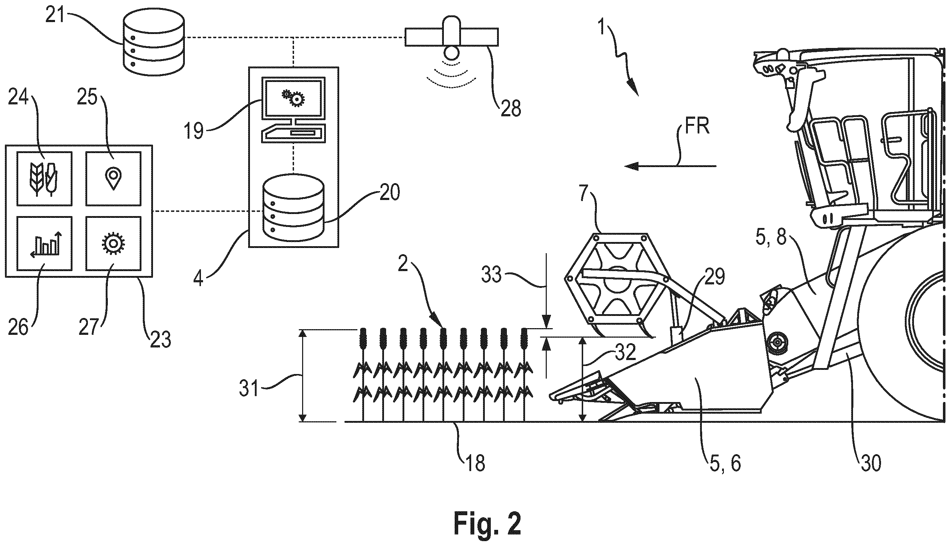

Wie in der Fig. 1 angedeutet und der Fig. 2 konkreter dargestellt ist, weist der selbstfahrende Mähdrescher 1 eine Einstellvorrichtung 4 zur Einstellung des Mähdreschers 1 in Abhängigkeit von Betriebsparametern 26 des Mähdreschers 1 und sensorisch erfassten Umgebungsparametern 24 der Umgebung des Mähdreschers 1 auf, wobei die Betriebsparameter 26 die Haspelhöhe 32 der Haspel 7 und die Umgebungsparameter 24 die Pflanzenhöhe 31 des aufzunehmenden Pflanzenbestandes 2 umfassen.

Die Einstellvorrichtung 4 umfasst eine Recheneinheit 19 mit einem internen Datenspeicher 20 und/oder einem externen Datenspeicher 21 und ist dazu eingerichtet, in Abhängigkeit der Haspelhöhe 32 und der Pflanzenhöhe 31 einen Haspeleingriffswert 33 zu ermitteln und basierend auf diesem ermittelten Haspeleingriffswert 33 den selbstfahrenden Mähdrescher 1 einzustellen.

Dieser Haspeleingriffswert 33 entspricht der Differenz zwischen der eingestellten Haspelhöhe 32 und der sensorisch erfassten Pflanzenhöhe 31. Der Haspeleingriffswert 33 stellt eine Kenngröße für die Haspelposition in Relation zur Pflanzenhöhe 31 dar. Dementsprechend ist es möglich, eine Vorgabe für den optimalen Haspeleingriff bei verschiedenen Früchten und Bestandsbedingungen zu ermitteln. Dieser Eingriff der Haspel 7 ist eine sehr relevante Größe im Prozess der Erntegutaufnahme. Durch die kontinuierliche Ermittlung des Haspeleingriffs als Kenngröße ergibt sich ein neuer Anzeige- und/oder Einstellwert im Mähdrescher 1, der aussagekräftiger ist als eine reine Haspelposition 32. Bei einer Haspelhöhe 32 kleiner als der Pflanzenhöhe 31, also bei einem negativen Zahlenwert des Haspeleingriffswertes 33, liegt ein Eingriff der Haspel 7 in den zu erntenden Pflanzenbestand 2 vor. Hierdurch wird u.a. die Einstellung und/oder Kommunikation bezüglich der richtigen Haspelstellung präzisiert.

Die Einstellvorrichtung 4 kann dazu vorgesehen und eingerichtet sein, eine nicht dargestellte Bedienvorrichtung des selbstfahrenden Mähdreschers 1 derart einzustellen, dass einem Fahrer 22, der in der Fig. 1 dargestellt ist, der ermittelte Haspeleingriffswert 33 optisch sichtbar dargestellt und/oder akustisch wahrnehmbar mitgeteilt wird. Die Bedienvorrichtung des selbstfahrenden Mähdreschers 1 kann hierfür ein Display und/oder Audiogerät aufweisen.

Zusätzlich kann die Einstellvorrichtung dazu vorgesehen und eingerichtet sein, aus dem ermittelten Haspeleingriffswert 33 eine einfacher zu merkende Kenngröße bezüglich des Haspeleingriffs zu erstellen. Beispielsweise kann ein Haspeleingriff von 20cm bis -20cm als Kenngröße von 2 bis -2 dargestellt werden.

Der selbstfahrende Mähdrescher 1 kann eine nichtdargestellte Sensorvorrichtung oder mehrere nichtdargestellte Sensorvorrichtungen zur Erfassung der Pflanzenhöhe 31 des aufzunehmenden Pflanzenbestandes 2 aufweisen. Wenigstens eine Sensorvorrichtung kann als Lidar-System, Kamera-System und/oder Radar-System ausgebildet sein.

Alternativ oder zusätzlich kann die Erfassung der Pflanzenhöhe 31 des aufzunehmenden Pflanzenbestandes 2 in Verbindung mit einer separat bezüglich des selbstfahrenden Mähdreschers 1 ausgebildeten Vorrichtung, insbesondere mit einer nicht dargestellten Drohne und/oder mit einem Satelliten 28, erfolgen.

Im Datenspeicher 20 und/oder 21 der Einstellvorrichtung 4 kann ein Datensatz 23 hinterlegt sein, der Umgebungsparameter 24, Standortinformationen 25, Betriebsparameter 26 des Mähdreschers 1 und/oder Maschinenparameter 27 des Mähdreschers 1 umfasst.

Die Einstellvorrichtung 4 kann dazu eingerichtet sein, die Aktoren 29, 30 automatisch derart einzustellen, dass der ermittelte Haspeleingriffswert 33 einem Sollwert entspricht. Dieser Sollwert für den Haspeleingriffswert 33 kann in Abhängigkeit der Standortinformationen 25 bezüglich des landwirtschaftlichen Feldbodens 18 ermittelt werden.

Außerdem kann die Einstellvorrichtung 4 dazu eingerichtet sein, den Sollwert für den Haspeleingriffswert 33 in Abhängigkeit der Pflanzenart des Pflanzenbestandes 2 zu ermitteln.

Alternativ oder zusätzlich kann die Einstellvorrichtung 4 dazu eingerichtet sein, den Sollwert für den Haspeleingriffswert 33 in Abhängigkeit der Maschinenparameter 27 zu ermitteln, wobei sich die Maschinenparameter 27 auf die Ausgestaltung und/oder die Art des Schneidwerks 6 des selbstfahrenden Mähdreschers 1 beziehen.

### Bezugszeichenliste

| | | | |
|---|---|---|---|
| 1 | Selbstfahrender Mähdrescher | FR | FR Fahrtrichtung |
| 2 | Pflanzenbestand | | |
| 3 | Antriebsmotor | | |
| 4 | Einstellvorrichtung | | |
| 5 | Arbeitsaggregat | | |
| 6 | Schneidwerk | | |
| 7 | Haspel | | |
| 8 | Schrägförderer | | |
| 9 | Dreschwerk | | |
| 10 | Abscheidevorrichtung | | |
| 11 | Förder- und Reinigungsvorrichtung | | |
| 12 | Kornelevator | | |
| 13 | Überkehrschnecke | | |
| 14 | Gebläse | | |
| 15 | Strohhäcksler | | |
| 16 | Korntank | | |
| 17 | Korntankentleerungsvorrichtung | | |
| 18 | landwirtschaftlicher Feldboden | | |
| 19 | Recheneinheit | | |
| 20 | interner Datenspeicher | | |
| 21 | externer Datenspeicher | | |
| 22 | Fahrer | | |
| 23 | Datensatz | | |
| 24 | Umgebungsparameter | | |
| 25 | Standortinformationen | | |
| 26 | Betriebsparameter | | |
| 27 | Maschinenparameter | | |
| 28 | Satellit | | |
| 29 | Aktor der Haspel | | |
| 30 | Aktor des Schneidwerks | | |
| 31 | Pflanzenhöhe | | |
| 32 | Haspelhöhe | | |
| 33 | Haspeleingriffswert | | |

## Patentansprüche

1. Selbstfahrender Mähdrescher (1),
- mit Arbeitsaggregaten (5) zum Aufnehmen, Bearbeiten und Weiterleiten von Erntegut eines Pflanzenbestandes (2), der auf einem landwirtschaftlichen Feldboden (18) ausgebildet ist und bezüglich dieses Feldbodens (18) eine Pflanzenhöhe (31) aufweist, wobei ein Arbeitsaggregat (5) ein Schneidwerk (6) ausbildet, welches eine Haspel (7) umfasst, die eine mittels Aktoren (29, 30) einstellbare Haspelhöhe (32) bezüglich des Feldbodens (18) aufweist, und
- mit einer Einstellvorrichtung (4) zur Einstellung des Mähdreschers (1) in Abhängigkeit von Betriebsparametern (26) des Mähdreschers (1) und sensorisch erfassten Umgebungsparametern (24) der Umgebung des Mähdreschers (1), wobei die Betriebsparameter (26) die Haspelhöhe (32) der Haspel (7) und die Umgebungsparameter (24) die Pflanzenhöhe (31) des aufzunehmenden Pflanzenbestandes (2) umfassen, **dadurch gekennzeichnet,**
- **dass** die Einstellvorrichtung (4) dazu vorgesehen und eingerichtet ist, in Abhängigkeit der Haspelhöhe (32) und der Pflanzenhöhe (31) einen Haspeleingriffswert (33) zu ermitteln und basierend auf diesem ermittelten Haspeleingriffswert (33) den selbstfahrenden Mähdrescher (1) einzustellen.

2. Selbstfahrender Mähdrescher (1) nach Anspruch 1,
**dadurch gekennzeichnet,**
**dass** der Haspeleingriffswert (33) der Differenz zwischen der eingestellten Haspelhöhe (32) und der sensorisch erfassten Pflanzenhöhe (31) entspricht.

3. Selbstfahrender Mähdrescher (1) nach einem der vorhergehenden Ansprüche,
**dadurch gekennzeichnet,**
**dass** die Einstellvorrichtung (4) dazu vorgesehen und eingerichtet ist, eine Bedienvorrichtung des selbstfahrenden Mähdreschers (1) derart einzustellen, dass einem Fahrer (22) des selbstfahrenden Mähdreschers (1) der ermittelte Haspeleingriffswert (33) optisch sichtbar dargestellt und/oder akustisch wahrnehmbar mitgeteilt wird.

4. Selbstfahrender Mähdrescher (1) nach einem der vorhergehenden Ansprüche,
**dadurch gekennzeichnet,**
**dass** die Einstellvorrichtung (4) dazu vorgesehen und eingerichtet ist, aus dem ermittelten Haspeleingriffswert (33) eine Kenngröße bezüglich des Haspeleingriffs zu erstellen.

5. Selbstfahrender Mähdrescher (1) nach einem der vorhergehenden Ansprüche,
**dadurch gekennzeichnet,**
**dass** der selbstfahrende Mähdrescher (1) eine Sensorvorrichtung oder mehrere Sensorvorrichtungen zur Erfassung der Pflanzenhöhe (31) des aufzunehmenden Pflanzenbestandes (2) aufweist.

6. Selbstfahrender Mähdrescher (1) nach Anspruch 5,
**dadurch gekennzeichnet,**
**dass** wenigstens eine Sensorvorrichtung ein Lidar-System ausbildet.

7. Selbstfahrender Mähdrescher (1) nach Anspruch 5 oder 6,
**dadurch gekennzeichnet,**
**dass** wenigstens eine Sensorvorrichtung ein Kamera-System ausbildet.

8. Selbstfahrender Mähdrescher (1) nach einem der Ansprüche 5 bis 7,
**dadurch gekennzeichnet,**
**dass** wenigstens eine Sensorvorrichtung ein Radar-System ausbildet.

9. Selbstfahrender Mähdrescher (1) nach einem der vorhergehenden Ansprüche,
**dadurch gekennzeichnet,**
**dass** die Erfassung der Pflanzenhöhe (31) des aufzunehmenden Pflanzenbestandes (2) mittels einer separat bezüglich des selbstfahrenden Mähdreschers (1) ausgebildeten Vorrichtung, insbesondere einer Drohne und/oder einem Satelliten (28), erfolgt.

10. Selbstfahrender Mähdrescher (1) nach einem der vorhergehenden Ansprüche,
**dadurch gekennzeichnet,**
**dass** die Einstellvorrichtung (4) dazu vorgesehen und eingerichtet ist, die Aktoren (29, 30) derart einzustellen, dass der ermittelte Haspeleingriffswert (33) einem Sollwert entspricht.

11. Selbstfahrender Mähdrescher (1) nach Anspruch 10,
**dadurch gekennzeichnet,**
**dass** die Einstellvorrichtung (4) dazu vorgesehen und eingerichtet ist, den Sollwert für den Haspeleingriffswert (33) in Abhängigkeit von Standortinformationen (25) zu ermitteln.

12. Selbstfahrender Mähdrescher (1) nach Anspruch 10 oder 11,
**dadurch gekennzeichnet,**
**dass** die Einstellvorrichtung (4) dazu vorgesehen und eingerichtet ist, den Sollwert für den Haspeleingriffswert (33) in Abhängigkeit von Standortinformationen (25) bezüglich des landwirtschaftlichen Feldbodens (18) zu ermitteln.

13. Selbstfahrender Mähdrescher (1) nach einem der Ansprüche 10 bis 12,
**dadurch gekennzeichnet,**
**dass** die Einstellvorrichtung (4) dazu vorgesehen und eingerichtet ist, den Sollwert für den Haspeleingriffswert (33) in Abhängigkeit der Pflanzenart des Pflanzenbestandes (2) zu ermitteln.

14. Selbstfahrender Mähdrescher (1) nach einem der Ansprüche 10 bis 13,
**dadurch gekennzeichnet,**
**dass** die Einstellvorrichtung (4) dazu vorgesehen und eingerichtet ist, den Sollwert für den Haspeleingriffswert (33) in Abhängigkeit von Maschinenparametern (27) zu ermitteln.

15. Selbstfahrender Mähdrescher (1) nach Anspruch 14,
**dadurch gekennzeichnet,**
**dass** sich die Maschinenparameter (27) auf die Ausgestaltung und/oder die Art des Schneidwerks (6) des selbstfahrenden Mähdreschers (1) beziehen.
